# EUROPÄISCHE PATENTSCHRIFT

(11) **EP 0 933 290 B1**
(45) Veröffentlichungstag und Bekanntmachung des Hinweises auf die Patenterteilung: **09.11.2005**
(21) Anmeldenummer: 98123741.5
(22) Anmeldetag: 14.12.1998
(51) Int. Cl.: B62J 7/00, B62J 11/02

(54) **Lasttragkörper für einen Gepäckträger**
Loading element for a luggage carrier
Elément porteur de charge pour porte-bagages

(30) Priorität: 29.01.1998 CH 21798
(43) Veröffentlichungstag der Anmeldung: 04.08.1999
(73) Patentinhaber: GEBRÜDER PLETSCHER AG, CH-8460 Marthalen (CH)
(72) Erfinder: Bally, Diego, 8006 Zürich (CH); Weissenberger, Heinz, 79798 Jestetten (CH)
(74) Vertreter: Schaad, Balass, Menzl & Partner AG

(56) Entgegenhaltungen:
- WO-A-90/09304
- DE-A- 3 831 842

## Beschreibung

Die Erfindung betrifft einen Lasttragkörper für einen Gepäckträger für ein Zwei- oder Dreiradfahrzeug gemäss Oberbegriff des Anspruches 1.

Lasttragkörper für Gepäckträger für Zwei- oder Dreiradfahrzeuge sind in der Regel so ausgestaltet, das mittels entsprechender Vorrichtungen, wie z.B. Klemmbügel oder Spanngummis, Lasten auf ihnen befestigt werden können, die mit den Fahrzeugen transportiert werden sollen. Der Gepäckträger und damit auch sein Lasttragkörper sind in der Regel fest am Fahrzeug installiert und lassen sich nur mit entsprechendem Montageaufwand wegnehmen oder wieder anbringen. Der Gepäckträger wird, auch wenn keine Last transportiert wird, permanent mit dem Fahrzeug mitgeführt und sein Lasttragkörper erfüllt meist keine weitere Aufgabe als nur das Tragen und Sichern einer für den Transport auf einem Zwei- oder Dreiradfahrzeug bestimmten Last.

Aus der DE-A-38 31 842 ist ein gattungsgemässer Lasttragkörper für einen Gepäckträger mit einem, einen abhebbaren Deckel aufweisenden Aufnahmebehälter zum Unterbringen von kleineren Gegenständen wie Luftpumpe, Regenmantel, Schlösser und diverse Kleinteile bekannt. Die Oberseite des Aufnahmebehälters ist als Tragfläche für zu transportierendes Gepäck ausgebildet und ist zu diesem Zweck strukturiert. Der Aufnahmebehälter und insbesondere dessen Deckel wird mit dem gesamten Gewicht des zu transportierenden Gepäcks belastet und muss dementsprechend stabil ausgebildet sein. Das Ausgestalten der Oberseite des Aufnahmebehälters als strukturierte Tragfläche erfordert zudem einen gewissen Mehraufwand bei der Herstellung.

Der vorliegenden Erfindung liegt nun die Aufgabe zugrunde, einen Lasttragkörper der eingangs genannten Art mit einem Aufnahmebehälter mit Deckel zu schaffen, bei dem der Aufnahmebehälter von der Abstützung des gesamten Gewichtes der zu transportierenden Last entlastet ist und daher einfacher ausgestaltet werden kann.

Diese Aufgabe wird erfindungsgemäss mit einem Lasttragkörper mit den Merkmalen des Anspruches 1 gelöst.

Da der Boden und die Seitenwände des zur Tragfläche hin offenen, durch den Deckel abgeschlossenen Aufnahmebehälters aus in Längsrichtung des Aufnahmebehälters voneinander beabstandeten Behälterrippen festgelegt sind, lässt sich Gewicht einsparen und ein Ansammeln von Wasser im Behälter vermeiden. Die Tragfläche wird in erster Linie durch Tragrippen gebildet und nur zum Teil durch den Deckel des Aufnahmebehälters.

Im mit dem Deckel verschlossenen Aufnahmebehälter des Lasttragkörpers kann z.B. die Luftpumpe bruchsicher verstaut werden. Sie ist von aussen kaum erkennbar und sehr unauffällig im Aufnahmebehälter untergebracht, was Gelegenheitsdiebstählen vorbeugt. Das Gleiche gilt für andere Gegenstände, die in diesem Aufnahmebehälter untergebracht werden, also z.B. auch für Werkzeug und Flickmaterial. Dieser Vorteil wird weiter verstärkt, wenn der Aufnahmebehälter abschliessbar ausgestaltet ist.

Da der Aufnahmebehälter unterhalb der Tragfläche des Lasttragkörpers angeordnet ist, ragt kein Teil seitlich über den Lasttragkörper vor und es entstehen keine Unsymmetrien, z.B. in der Gewichtsverteilung.

Vorzugsweise liegt der Deckel des Aufnahmebehälters etwa in einer Ebene mit der Tragfläche des Lasttragkörpers. So bleibt die Tragfläche ohne Einschränkungen nutzbar.

Erstreckt sich der Aufnahmebehälter entlang der Mittellängsachse des Lasttragkörpers, so befindet sich der Aufnahmebehälter bei einem Zweirad, z.B. einem Fahrrad, genau über dem Fahrzeugreifen, und kann so als Spritzschutz dienen, falls kein Schutzblech vorhanden ist.

Der Aufnahmebehälter weist vorteilhaft ein oder mehrere Fixierelemente zur Fixierung einer Luftpumpe und/oder eines anderen Gegenstandes, z.B. eines internen Behälters für Werkzeug, auf, so dass diese Gegenstände sich im Aufnahmebehälter nicht frei bewegen können und bei einer Fahrt über unebenes Gelände nicht geräuschvoll im Aufnahmebehälter hin und her geschleudert werden. Sollen im Aufnahmebehälter andere Gegenstände als eine Luftpumpe verstaut werden, beispielsweise Werkzeug oder Flickmaterial, so kann ein z.B. rohrförmiger und beispielsweise mit einem Schraubverschluss versehener Behälter vorgesehen sein, in dem diese Gegenstände verstaut werden und der dann wie die Luftpumpe durch das oder die Fixierelemente in dem Aufnahmebehälter fixiert wird.

Es ist von Vorteil, wenn der Lasttragkörper an seinem gegen das rückwärtige Ende des Fahrzeugs ausgerichteten hinteren Ende ein Rücklichtaufnahmeelement für die Aufnahme eines selbststrahlenden und/oder reflektierenden Rücklichtes aufweist. Durch das Rücklichtaufnahmeelement kann das Rücklicht einfach und schnell am Lasttragkörper fixiert werden. Es muss kein zusätzliches Element zur Aufnahme des Rücklichtes am Gepäckträger oder am Fahrzeug selbst angebracht werden, wodurch sich die Montage des Rücklichtes vereinfacht und der Lasttragkörper eine zusätzliche Nutzbarkeit erfährt.

Weitere bevorzugte Ausführungsformen bilden Gegenstand der weiteren abhängigen Ansprüche.

Anhand der Figuren 1 bis 6 wird im Folgenden die Erfindung an einem Beispiel erläutert. Es zeigen rein schematisch:
- Fig. 1: Einen erfindungsgemässen Lasttragkörper eines Gepäckträgers mit Klemmbügel in Draufsicht ;
- Fig. 2: eine Seitenansicht des in Fig. 1 gezeigten Lasttragkörpers ohne Klemmbügel;
- Fig. 3: einen Schnitt des in Fig. 1 gezeigten Lasttragkörpers entlang der Schnittlinie I-I in Fig. 1 ohne Klemmbügel;
- Fig. 4a: einen Schnitt entlang der Schnittlinie II-II in Fig. 3;
- Fig. 4b: in vergrösserter Darstellung den in Fig. 3 mit X bezeichneten Bereich;
- Fig. 5: einen Schnitt entlang der Schnittlinie III-III in Fig. 3;
- Fig. 5a: in vergrösserter Darstellung den in Fig. 3 mit Y bezeichneten Bereich; und
- Fig. 6: den in Fig. 3 gezeigten Schnitt des Lasttragkörpers mit geöffnetem Deckel des Aufnahmebehälters.

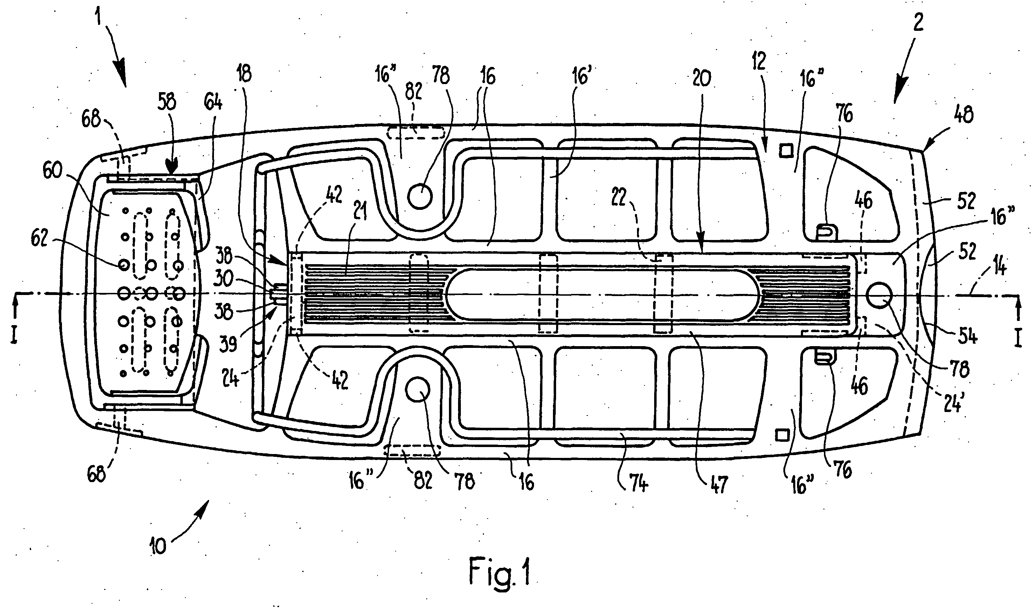

Der in den Fig. 1 bis 6 dargestellte langgestreckte, im wesentlichen z.B. aus Aluminium-Druckguss hergestellte, Lasttragkörper 10 für einen Gepäckträger weist ein nach der Montage gegen den Fahrzeugsitz oder Sattel gerichtetes, vorderes Ende 1 und ein gegen das rückwärtige Ende des Fahrzeugs gerichtetes, hinteres Ende 2 auf. Die Oberseite des Lasttragkörpers 10 wird durch eine im wesentlichen ebene Tragfläche 12 gebildet, die nur an den beiden Enden 1, 2 des Lasttragkörpers 10 leicht ansteigt. Die Tragfläche 12 ihrerseits wird im wesentlichen durch Längstragrippen 16 und Quertragrippen 16' des Lasttragkörpers 10 gebildet, welche mehr oder weniger parallel bzw. etwa rechtwinklig zur Mittellängsachse 14 des Lasttragkörpers 10 verlaufen.

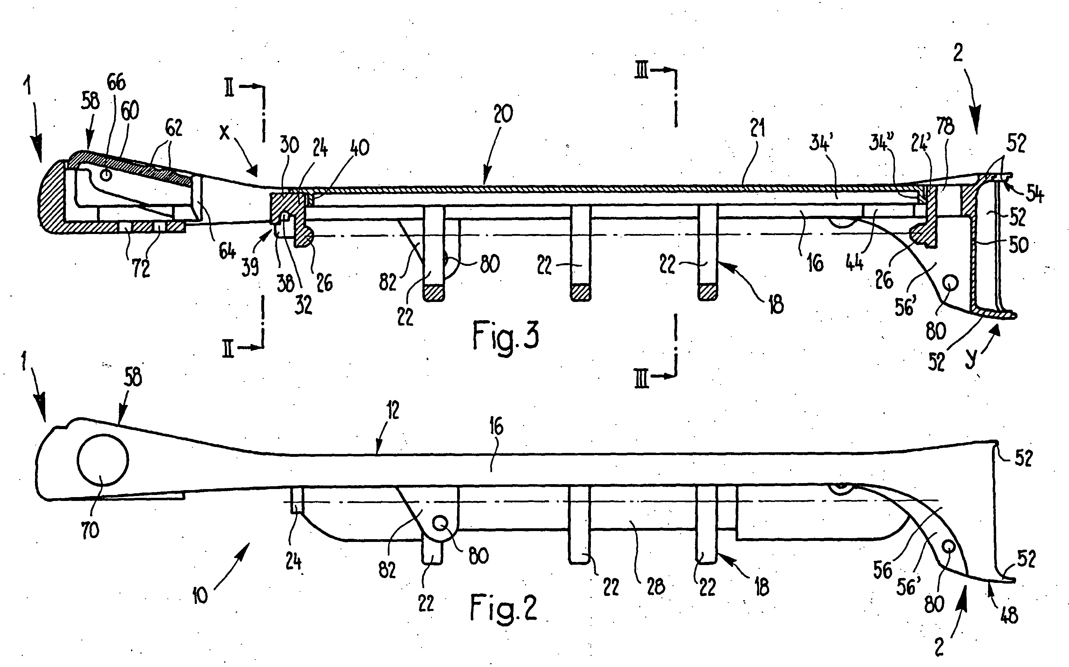

Entlang der Mittellängsachse 14 des Lasttragkörpers 10 erstreckt sich ein Aufnahmebehälter 18, mit einem, z.B. aus Kunststoff hergestellten Deckel 20, der eine Deckelplatte 21 aufweist. Ist der Aufnahmebehälter 18 mit dem Deckel 20 verschlossen, so liegt die Deckelplatte 21 etwa in der Ebene der Tragfläche 12 und bildet einen Teil von dieser. Auf der der Tragfläche 12 gegenüberliegenden Unterseite des Lasttragkörpers 10 stehen U-förmige, in Längsrichtung voneinander beabstandete Behälterrippen 22 ab, die den Boden und die Seitenwände des Aufnahmebehälters 18 entlang der Längsachse 14 festlegen. Die Behälterrippen 22 sind einstückig an Längstragrippen 16 des Lasttragkörpers 10 angeformt, die die oberen Längskanten des Aufnahmebehälters 18 bilden. Stirnseitig ist der Aufnahmebehälter 18 durch Behälterwände 24, 24' begrenzt, die sich nur über einen Teil der Stirnseiten des Aufnahmebehälters 18 erstrecken und die ebenfalls mit den die Längskanten des Aufnahmebehälters 18 bildenden Längstragrippen 16 verbunden sind. An beiden Behälterwänden 24, 24' sind auf den gegen das Behälterinnere gerichteten Seiten Fixierelemente 26 angeformt, die eine Luftpumpe 28 in der in Fig. 2 gezeigten Position fixieren. Wie in Fig. 2 zu erkennen liegt die Luftpumpe 28 nicht auf den U-förmigen Behälterrippen 22 auf. Die Behälterrippen 22 sichern vielmehr die Luftpumpe 28, falls sie sich aus der Fixierung zwischen den Fixierelementen 26 lösen sollte, oder einen Behälter für andere Gegenstände gegen ein Herabfallen und, wie weiter unten genauer ausgeführt wird, bei einem verschliessbaren Aufnahmebehälter 18 gegen Diebstahl. Der Behälter zur Aufnahme anderer Gegenstände, wie insbesondere von Werkzeug Flickmaterial u.a.m., kann entweder ein verschliessbarer Hohlkörper sein, der einfach in den durch die U-förmigen Behälterrippen 22 begrenzten Aufnahmebehälter 18 hineingelegt wird. Er kann aber beispielsweise auch, wie die Luftpumpe 28 in Fig. 2, durch die Fixierelemente 26 im Aufnahmebehälter 18 fixiert sein.

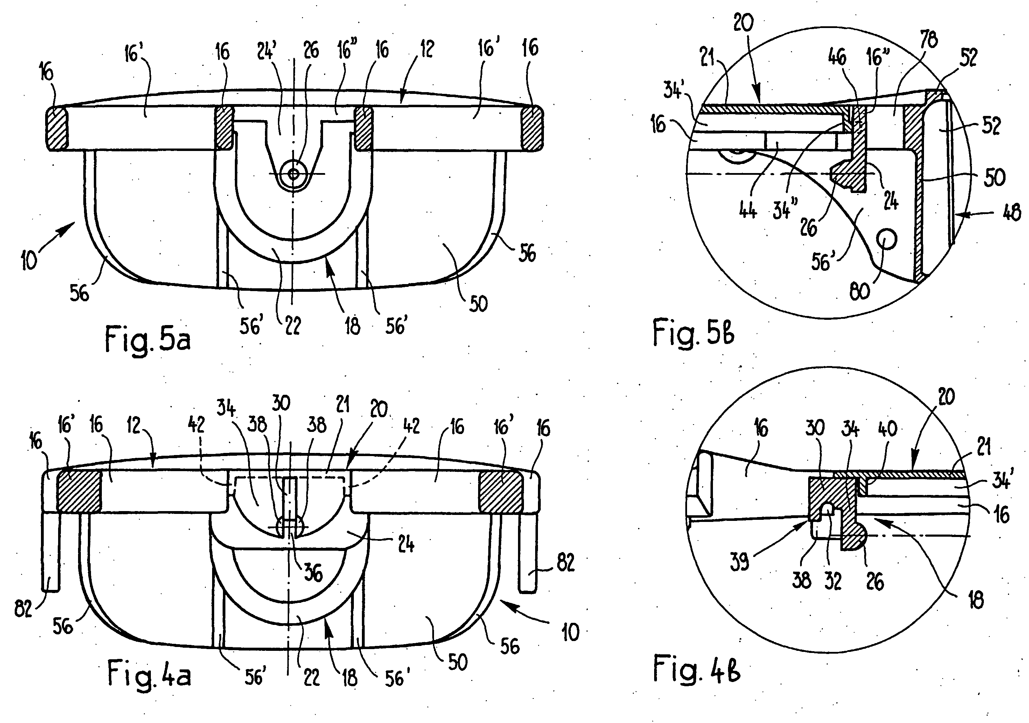

An die dem vorderen Ende 1 des Lasttragkörpers 10 zugewandte Behälterwand 24 ist, auf der dem Fixierelement 26 gegenüberliegenden Seite, ein erstes nasenförmig vorspringendes Element 30 mit einer ersten, gegen unten offenen Aussparung 32 angeformt. Der Deckel 20 des Aufnahmebehälters 18 weist seinerseits auf seiner dem vorderen Ende 1 zugewandten Seite eine zweigeteilte, senkrecht von der Deckelplatte 21 herabgezogene, halbkreisförmig ausgebildete Stirnwand 34 auf. Wobei die Zweiteilung dieser Stirnwand 34 durch eine der Breite des ersten, vorspringenden Elements 30 der Behälterwand 24 angepassten, zweiten Aussparung 36 verursacht wird, in welche das erste vorspringende Element 30 hineingreift, wenn der Deckel 20 auf dem Aufnahmebehälter 18 aufliegt. Am Umfang der halbkreisförmig ausgebildeten Stirnwand 34 des Deckels 20 sind zu beiden Seiten der zweiten Aussparung 36 zweite, senkrecht gegen die Behälteraussenseite vorspringende Elemente 38 angeformt. Ist der Aufnahmebehälter 18 mit dem Deckel 20 verschlossen, liegt der Deckel 20 auf der Behälterwand 24 so auf, dass die halbkreisförmig ausgebildete Stirnwand 34 auf der Aussenseite des Aufnahmebehälters 18 vor der Behälterwand 24 liegt. Wie erwähnt, greift dabei das erste nasenförmig vorspringende Element 30 der Behälterwand 24 in die zweite Aussparung 36 der zweigeteilten, halbkreisförmigen Stirnwand 34. Die beiden zweiten, vorspringenden Elemente 38 der halbkreisförmigen Stirnwand 34 sind dabei so neben dem ersten, nasenförmig vorspringenden Element 30 positioniert, dass sie die erste Aussparung 32 des ersten, vorspringenden Elements 30 am unteren Rand seitlich verschliessen. Auf diese Weise entsteht ein Verschlusselement 39, in das ein Vorhängeschloss eingehängt werden kann (Fig. 4b), so dass der Aufnahmebehälter 18 abgeschlossen werden kann. Die U-förmigen Behälterrippen 22 des Aufnahmebehälters 18 sind so angeordnet, dass die Luftpumpe 28 oder ein im Aufnahmebehälter 18 befindlicher Behälter zur Aufnahme sonstiger Gegenstände bei mit dem Deckel 20 verschlossenem Aufnahmebehälter 18 nicht aus diesem entfernt, also auch nicht nach unten oder seitlich aus diesem herausgenommen werden kann. Der Lasttragkörper 10 dient auf diese Weise also nicht nur dem Tragen von Lasten sondern bietet auch noch die Möglichkeit die Luftpumpe 28 oder andere Gegenstände diebstahlsicher und vor Zerstörung geschützt aufzubewahren und zu transportieren.

Von der zweigeteilten, halbkreisförmig herabgezogenen Stirnwand 34 nach innen versetzt, weist der Deckel 20 einen Steg 40 auf, der in einem Abstand zur Stirnwand 34 angeordnet ist und senkrecht von der Deckelplatte 21 absteht. Der Abstand entspricht dabei in etwa der Wanddicke der Behälterwand 24. Die Behälterwand 24 weist ihrerseits dort, wo sie mit den Längstragrippen 16 des Lasttragkörpers 10 verbunden ist, kleine Einschnitte 42 auf (Fig. 1 und 4a), durch welche senkrecht von der Deckelplatte 21 herabgezogene Seitenwände 35 des Deckels 20 hindurchgreifen. Durch die Deckelplatte 21, die Seitenwände 35, die halbkreisförmige Stirnwand 34 und den Steg 40 wird ein Raum begrenzt. Die Behälterwand 24 greift mit nur geringem Spiel mit ihrem dem Deckel entgegenragenden Ende in diesen Raum, wodurch der Deckel 20 beim Verschliessen des Aufnahmebehälters 18 gut fixiert und gegen Verrutschen gesichert auf der Behälterwand 24 sitzt. Am hinteren Ende 2 des Lasttragkörpers 10 liegen die Seitenwände 35 auf Auflagern 44 auf, die an der dem Behälterinneren zugewandten Seite der die Längskanten des Aufnahmebehälters 18 bildenden Längstragrippen 16 angeformt sind (Fig. 3 und 5b). Auch die der halbkreisförmig herabgezogenen Stirnseite 34 gegenüberliegende, hintere Stirnseite 34' ist wie die Seitenwände 35 nur leicht herabgezogen. Senkrecht von dieser hinteren Stirnseite 34' nach aussen stehen in Verlängerung der Längsseiten rechtwinklig zwei Ansätze 46 ab, die an der Behälterwand 24' seitlich vorbei eine verstärkte Querrippe 16'' untergreifen (Fig. 1 und 5b), und den Deckel 20 an diesem Ende 2 des Lasttragkörpers 10 in seiner Position im Aufnahmebehälter 18 fixieren. Auch wenn der Aufnahmebehälter 18 nicht durch ein Schloss gesichert und abgeschlossen ist, kann der Deckel 20 des Aufnahmebehälters 18 also nicht verrutschen oder gar aufspringen und verlorengehen. Die gezeigte Konstruktion des Deckels 20 und seiner Befestigung im Aufnahmebehälter 18 des Lasttragkörpers 10 ist so gewählt, dass der Deckel 20 nicht nur aufgeklappt sondern ganz entfernt werden kann. So lässt sich der Deckel 20, falls nötig, leicht ersetzen. Da die Deckelplatte 21 als Beschriftungsfeld 47 ausgebildet ist, lässt sie sich leicht mit unterschiedlichen Dessins gestalten und kann z.B. auch als auswechselbarer Werbeträger genutzt werden.

Am hinteren Ende 2 des Lasttragkörpers 10 ist, diesen abschliessend, ein Rücklichtaufnahmeelement 48 angeformt, dessen senkrecht zur Längsachse 14 des Lasttragkörpers 10 angeordnete Wandplatte 50 in den Fig. 4b und 5b deutlich zu erkennen ist. Von der Wandplatte 50 stehen oben, unten und auf beiden Seiten senkrecht, gegen hinten Seiteneinfassungen 52 ab. Die obere Seiteneinfassung 52 des Rücklichtaufnahmeelements 48 weist eine dritte Aussparung 54 auf, um für ein selbstleuchtendes Rücklicht eine grössere Leuchtfläche gegen oben freizulassen. Die vier Seiteneinfassungen 52 und die Wandplatte 50 ergeben eine eng sitzende Fassung für ein nicht dargestelltes Rücklicht. Sitzt das Rücklicht nicht von sich aus fest in der durch das Rücklichtaufnahmeelement 48 gebildeten Fassung, kann es an der Wandplatte 50 fixiert werden. Gut passende, durch die Fassung fest umschlossene Rücklichter können für einen Lasttragkörper 18 mit einem solchen Rücklichtaufnahmeelement 48 auch ohne rückseitige Platte hergestellt sein, da das Rücklicht in eingebautem Zustand ja auf seiner Rückseite durch die Wandplatte 50 verschlossen wird. Für die Serienproduktion eines solchen Lasttragkörpers 18 mit bereits eingebautem Rücklicht lassen sich so Material und Kosten einsparen.

Über vier flächig ausgebildete Streben 56, 56', die sich von der Wandplatte 50 des Rücklichtaufnahmeelements 48 gegen das vordere Ende 1 des Lasttragkörpers 10 erstrekken, ist das Rücklichtaufnahmeelement 48 mit den Längstragrippen 16 des Lasttragkörpers 10 verbunden. Zwei Streben 56 an den Längsseiten des Lasttragkörpers 10 und zwei Streben 56' auf gleicher Höhe mit den die oberen Längskanten des Aufnahmebehälters 18 bildenden Längstragrippen 16. Alle Streben 56, 56' sind einstückig sowohl mit der Wandplatte 50 als auch mit den Längsstreben 16 verbunden.

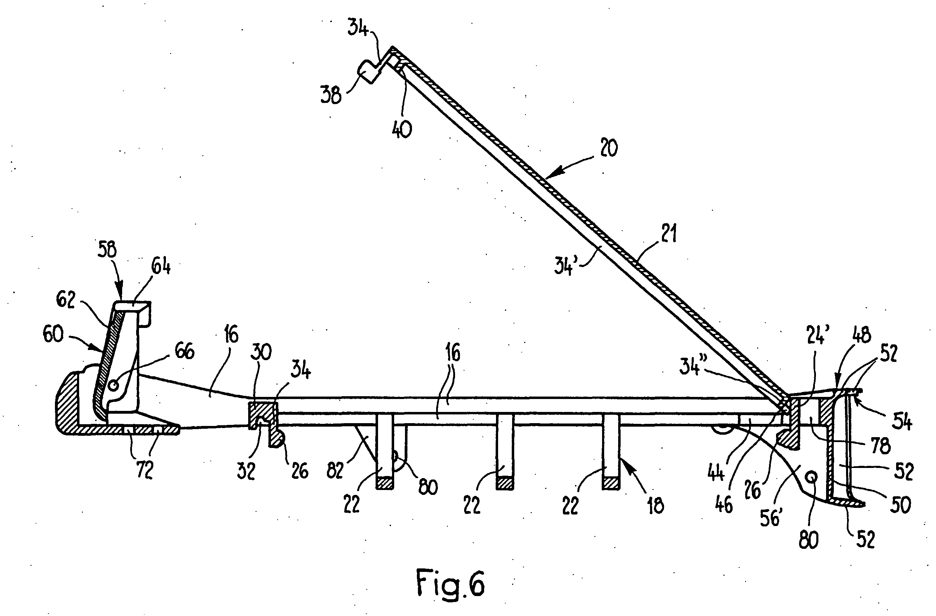

Am vorderen Ende 1 des Lasttragkörpers 10 befindet sich ein auf- und wieder wegklappbarer Gegenhalter 58, dessen Oberfläche 60 in nicht aufgeklapptem Zustand einen Teil der Tragfläche 12 bildet und für einen besseren Rutschwiderstand mit Noppen 62 versehen ist. Auf zwei Stiften 66, die durch Öffnungen 68 in den äusseren Längstragrippen 16 hindurchgeführt und durch Stiftköpfe 70 gesichert sind, ist der Gegenhalter 58 an seiner gegen das vordere Ende 1 gerichteten Seite um eine senkrecht zur Längsachse 14 verlaufende, ungefähr in der Ebene der Tragfläche 12 liegende Schwenkachse drehbar gelagert, so dass er gegen das vordere Ende 1 des Lasttragkörpers 10 aufgeklappt werden kann, wie dies in Fig. 6 dargestellt ist. An der der Schwenkachse des Gegenhalters 58 gegenüberliegenden Seite, sind gegen die Oberfläche 60 abgewinkelte Niederhalter 64 angeordnet, die sich in aufgeklapptem Zustand des Gegenhalters 58 in einem Abstand von der Tragfläche 12 befinden. In aufgeklapptem Zustand dient der Gegenhalter 58 als Widerlager für die auf dem Lasttragkörper 10 zu befestigende Last, so dass sie nicht gegen einen Teil des Fahrzeugs, bei einem Fahrrad z.B. gegen die Sattelstange, abgestützt werden muss. Durch die Niederhalter 64 werden z.B. flachere Gegenstände am Wegspringen nach Oben gehindert. In weiche Transportgegenstände wie Taschen und Säkke greifen die Niederhalter 64 krallenähnlich ein. Der Gegenhalter 58 erlaubt so in Kombination mit den Niederhaltern 64 ein wesentlich sichereres Befestigen der Last auf dem Lasttragkörper 10 des Gepäckträgers und damit einen sichereren Transport derselben. In weggeklapptem Zustand verdeckt der Gegenhalter 58 zudem Befestigungsteile, die zur mittelbaren oder unmittelbaren Befestigung des Lasttragkörpers 10 am Fahrzeug durch die dafür vorgesehenen Befestigungsöffnungen 72 hindurchgeführt werden.

Wie in Fig. 1 zu erkennen ist in dem gezeigten Beispiel zum Befestigen der Last auf dem Lasttragkörper 10 ein Klemmbügel 74 vorgesehen, der durch nicht dargestellte Spiralfedern in üblicher Weise gegen den Lasttragkörper 10 gepresst wird. Für die Aufnahme des einen Endes der Spiralfedern sind am hinteren Ende 2 des Lasttragkörpers 10 an die mittleren, die obere Längskante des Aufnahmebehälters 18 bildenden Längstragrippen 16 nach aussen abstehende Aufnahmeelemente 76 angebracht. Zur Aufnahme eines Aufsatzes in Form eines Korbes, Koffers, oder einer Anhängerkupplung o.ä., wie dies z.B. in der DE-A-44 24 943 beschrieben ist, sind in verstärkte Quertragrippen 16'' des Lasttragkörpers 10 Stecköffnungen 78 eingebracht.

Zur Befestigung des Lasttragkörpers 10 am Fahrzeug sind neben den Befestigungsöffnungen 72 unter dem Gegenhalter 58 Befestigungselemente 80 auf der der Tragfläche 12 gegenüberliegenden Unterseite des Aufnahmebehälters 18 vorgesehen. Diese Befestigungselemente 80 sind zum einen in Form von Flanschen 82 mit Befestigungslöchern 84 ausgebildet, die gegen das vordere Ende 1 des Lasttragkörpers 10 hin, in Höhe der zwei verstärkten Rippen 16'' an den äusseren Längstragrippen 16 senkrecht nach unten abstehend angeordnet sind. Zum anderen sind am hinteren Ende 2 des Lasttragkörpers 10 als Befestigungselemente 80 in die zwei mittleren Streben 56' Befestigungslöcher 84 eingearbeitet. Über die Befestigungselemente 80 können Stützstreben an dem Lasttragkörper 10 befestigt werden wie sie üblicherweise für die Abstützung eines Lasttragkörpers 10 eines Gepäckträgers eingesetzt werden. Im gezeigten Beispiel sind die Befestigungselemente 80 für die Stützstreben etwa in den Ecken eines Dreiecks zueinander angeordnet: die vorderen beiden am äusseren Rand des Lasttragkörpers 10, die hinteren beiden in Höhe der mittleren Längstragrippen 16. Diese spezielle Anordnung ermöglicht eine besonders stabile Abstützung und ist z.B. in der US-A-Des. 303,781 gezeigt.

Der erfindungsgemässe Lasttragkörper 10 ist natürlich nicht auf eine Ausführungsform, wie sie in den Fig. 1 bis 6 gezeigt wird, beschränkt. So kann z.B. satt des Klemmbügels 74 auch ein Spanngummi o.ä. zur Befestigung der Last vorgesehen sein und die Befestigungselemente 80 zum Anbringen der Stützstreben können anders angeordnet sein.

Anstelle des sich entlang der Mittellängsachse 14 erstreckenden Aufnahmebehälters 18 mit den Behälterrippen 22 könnte auch ein geschlossener Aufnahmebehälter 18 mit ringsum flächigen Wänden eingesetzt werden. Der Aufnahmebehälter 18 kann auch versetzt von der Mittellängsachse 14 in Längsrichtung des Lasttragkörpers 10 oder an einer Seite des Lasttragkörpers 10 angebracht sein. Oder der Aufnahmebehälter 18 kann sich auch diagonal über den Lasttragkörper 10 erstrecken.

Statt der zwei sich gegenüberliegenden Fixierelemente 26 ist auch eine einzelne Manschette vorstellbar, wenn sie in ihrer Längsausrichtung lang genug ausgestaltet ist, um einen Behälter oder die Luftpumpe 28 in Balance zu halten. Auch mehrere manschettenartig die Luftpumpe 28 oder einen Behälter umschliessende Fixierelemente können vorgesehen sein oder andere Fixiersysteme.

In der Wandplatte 50 des Rücklichtaufnahmeelements 48 können Öffnungen für eine Schraubbefestigung des Rücklichtes oder Elemente für eine Steckverbindung mit dem Rücklicht vorgesehen sein. Das Rücklichtaufnahmeelement 48 kann eine Durchführöffnung für die Durchführung eines für die Stromversorgung des Rücklichtes notwendigen Kabels zum Dynamo oder zu einer Batterie aufweisen. Oder es kann auch mit Kontaktelementen versehen sein, die auf der Seite des Rücklichtes, z.B. durch Berührung, den elektrischen Kontakt zum Rücklicht herstellen und auf der anderen Seite z.B. eine Steckverbindung zum Ein- oder Aufstecken des Kabels bieten. Auch ein Befestigungsteil zur Befestigung einer Batterie, z.B. in Form eines taschenartigen Behältnisses kann vorgesehen sein.

## Patentansprüche

1. Lasttragkörper für einen Gepäckträger für ein Zwei- oder Dreiradfahrzeug, mit einer Tragfläche (12) und einem langgestreckten Aufnahmebehälter (18) mit Deckel (20) für die Aufnahme von Gegenständen, insbesondere einer Luftpumpe (28) oder von Werkzeug, **dadurch gekennzeichnet, dass** die Tragfläche (12) durch Tragrippen (16, 16'), die sich in Längsrichtung des Lasttragkörpers (10) und quer dazu erstrecken, gebildet ist und der Boden und die Seitenwände des zur Tragfläche (12) hin offenen, durch den Deckel (20) verschlossenen Aufnahmebehälters (18) durch in Längsrichtung des Aufnahmebehälters (18) voneinander beabstandete, unterhalb der Tragfläche (12) angeordnete Behälterrippen (22) festgelegt sind.

2. Lasttragkörper nach Anspruch 1, **dadurch gekennzeichnet, dass** Behälterrippen (22) U-förmig ausgeformt sind.

3. Lasttragkörper nach Anspruch 1 oder 2, **dadurch gekennzeichnet, dass** der Deckel (20) des Aufnahmebehälters (18) etwa in einer Ebene mit der Tragfläche (12) liegt.

4. Lasttragkörper nach einem der Ansprüche 1 bis 3, **dadurch gekennzeichnet, dass** der Aufnahmebehälter (18) abschliessbar ist.

5. Lasttragkörper nach Anspruch 4, **dadurch gekennzeichnet, dass** an einer Stirnseite des Aufnahmebehälters (18) eine Behälterwand (24) des Aufnahmebehälters (18) und eine Stirnwand (34) des Deckels (20) je wenigstens ein vorspringendes Element (30, 38) aufweisen, die zusammenwirkend ein Verschlusselement (39) bilden, in das zum Abschliessen des Aufnahmebehälters (18) ein Vorhängeschloss einhängbar ist.

6. Lasttragkörper nach einem der Ansprüche 1 bis 5,
**dadurch gekennzeichnet, dass** der Deckel (20) des Aufnahmebehälters (18) abnehmbar ist und vorzugsweise eine Deckelplatte (21) aufweist, die als Beschriftungsfeld (47) ausgebildet ist oder ein Beschriftungsfeld aufweist.

7. Lasttragkörper nach einem der Ansprüche 1 bis 6, **dadurch gekennzeichnet, dass** der Aufnahmebehälter (18) sich entlang der Längsachse, vorzugsweise entlang der Mittellängsachse (14), des Lasttragkörpers (10) erstreckt.

8. Lasttragkörper nach einem der Ansprüche 1 bis 7, **dadurch gekennzeichnet, dass** der Aufnahmebehälter (18) wenigstens ein Fixierelement (26), vorzugsweise aber zwei in Längsrichtung einander gegenüberliegende Fixierelemente (26), zum Fixieren einer Luftpumpe (28) oder eines Behälter für andere Gegenstände aufweist.

9. Lasttragkörper nach einem der Ansprüche 1 bis 8, **dadurch gekennzeichnet, dass** er an seinem gegen das rückwärtige Ende des Fahrzeuges ausgerichteten, hinteren Ende (2) ein angeformtes Rücklichtaufnahmeelement (48) für die Aufnahme eines selbststrahlenden und/oder reflektierenden Rücklichtes aufweist.

10. Lasttragkörper nach einem der Ansprüche 1 bis 9, **dadurch gekennzeichnet, dass** er an seinem gegen den Sattel des Fahrzeugs ausgerichteten, vorderen Ende (1) einen vorzugsweise auf- und wegklappbaren Gegenhalter (58) aufweist.

11. Lasttragkörper nach Anspruch 10, **dadurch gekennzeichnet, dass** der Gegenhalter (58) einen Niederhalter (64) aufweist, der in aufgeklapptem Zustand des Gegenhalters (58) in einem Abstand von der Tragfläche (12) angeordnet ist.

12. Lasttragkörper nach einem der Ansprüche 1 bis 11, **dadurch gekennzeichnet, dass** er einen Klemmbügel (74) und/oder Stecköffnungen (78) für die Aufnahme eines aufsteckbaren Aufsatzes aufweist.

13. Lasttragkörper nach einem der Ansprüche 1 bis 12, **dadurch gekennzeichnet, dass** auf der, der Tragfläche (12) gegenüberliegenden Unterseite des Lasttragkörpers (10) Befestigungselemente (80) zum Anbringen von Stützstreben vorgesehen sind, die zueinander vorzugsweise etwa in den Ecken eines Dreiecks angeordnet sind.

## Claims

1. Load-carrying structure for a luggage carrier for a two-wheeled or three-wheeled vehicle, having a carrying face (12) and an elongate storage container (18) with a cover (20) for holding objects, in particular an air pump (28) or tool, **characterized in that** the carrying face (12) is formed by carrying ribs (16, 16') which extend in the longitudinal direction of the load-carrying structure (10) and transversely thereto, and the base and the side walls of the storage container (18), which is open towards the carrying face (12) and closed by the cover (20), are defined by container ribs (22) which are spaced apart in the longitudinal direction of the storage container (18) and which are arranged below the carrying face (12).

2. Load-carrying structure according to Claim 1, **characterized in that** the container ribs (22) are formed in a U shape.

3. Load-carrying structure according to Claim 1 or 2, **characterized in that** the cover (20) of the storage container (18) lies approximately in a plane with the carrying face (12).

4. Load-carrying structure according to one of Claims 1 to 3, **characterized in that** the storage container (18) is lockable.

5. Load-carrying structure according to Claim 4, **characterized in that** a container wall (24) of the storage container (18) and an end wall (34) of the cover (20) are each provided with at least one projecting element (30, 38) at one end of the storage container (18), these elements acting together to form a closure element (39) in which a padlock can be fitted in order to lock the storage container (18).

6. Load-carrying structure according to one of Claims 1 to 5, **characterized in that** the cover (20) of the storage container (18) is removable and preferably has a cover plate (21) which is designed as an inscription panel (47) or has an inscription panel.

7. Load-carrying structure according to one of Claims 1 to 6, **characterized in that** the storage container (18) extends along the longitudinal axis, preferably along the central longitudinal axis (14), of the load-carrying structure (10).

8. Load-carrying structure according to one of Claims 1 to 7, **characterized in that** the storage container (18) has at least one fixing element (26), but preferably two fixing elements (26) situated opposite one another in the longitudinal direction, for fixing an air pump (28) or a container for other objects.

9. Load-carrying structure according to one of Claims 1 to 8, **characterized in that**, at its rear end (2) oriented towards the rear end of the vehicle, it has an integrally formed rear-light-mounting element (48) for mounting a self-illuminating and/or reflecting rear light.

10. Load-carrying structure according to one of Claims 1 to 9, **characterized in that**, at its front end (1) oriented towards the saddle of the vehicle, it has a restraint (58) which can preferably be folded up and away.

11. Load-carrying structure according to Claim 10, **characterized in that** the restraint (58) has a holddown element (64) which is arranged at a distance from the carrying face (12) when the restraint (58) is in the folded-up state.

12. Load-carrying structure according to one of Claims 1 to 11, **characterized in that** it has a retaining clip (74) and/or insert openings (78) for holding a mountable attachment.

13. Load-carrying structure according to one of Claims 1 to 12, **characterized in that** fastening elements (80) for mounting support struts are provided on the underside, the side opposite the carrying face (12), of the load-carrying structure (10) and are preferably arranged approximately at the corners of a triangle with respect to one another.

## Revendications

1. Elément porteur de charge pour un porte-bagage pour un véhicule à deux ou trois roues, comprenant une surface porteuse (12) et un récipient de réception allongé (18) avec un couvercle (20) permettant de recevoir des objets, notamment une pompe (28), ou un outil, **caractérisé en ce que** la surface porteuse (12) est formée par des nervures porteuses (16, 16') qui s'étendent dans la direction longitudinale de l'élément porteur de charge (10) et transversalement à celui-ci, et le fond et les parois latérales du récipient de réception (18) ouvert vers la surface porteuse (12) et fermé par le couvercle (20) sont fixés par des nervures de récipient (22) espacées les unes des autres dans la direction longitudinale du récipient de réception (18) et disposées en dessous de la surface porteuse (12).

2. Elément porteur de charge selon la revendication 1, **caractérisé en ce que** les nervures de récipient (22) sont réalisées en forme de U.

3. Elément porteur de charge selon la revendication 1 ou 2, **caractérisé en ce que** le couvercle (20) du récipient de réception (18) se trouve approximativement dans le plan de la surface porteuse (12).

4. Elément porteur de charge selon l'une quelconque des revendications 1 à 3, **caractérisé en ce que** le récipient de réception (18) peut être fermé.

5. Elément porteur de charge selon la revendication 4, **caractérisé en ce que** sur un côté frontal du récipient de réception (18), une paroi de récipient (24) du récipient de réception (18) et une paroi frontale (34) du couvercle (20) présentent chacune au moins un élément saillant (30, 38), lesquels forment en coopération un élément de fermeture (39) dans lequel peut être accroché un cadenas pour fermer le récipient de réception (18).

6. Elément porteur de charge selon l'une quelconque des revendications 1 à 5, **caractérisé en ce que** le couvercle (20) du récipient de réception (18) peut être enlevé et présente de préférence une plaque de couvercle (21) qui est réalisée sous forme de zone d'inscription (47) ou qui présente une zone d'inscription.

7. Elément porteur de charge selon l'une quelconque des revendications 1 à 6, **caractérisé en ce que** le récipient de réception (18) s'étend le long de l'axe longitudinal, de préférence le long de l'axe médian longitudinal (14) de l'élément porteur de charge (10).

8. Elément porteur de charge selon l'une quelconque des revendications 1 à 7, **caractérisé en ce que** le récipient de réception (18) présente au moins un élément de fixation (26), de préférence toutefois deux éléments de fixation (26) opposés dans la direction longitudinale, pour la fixation d'une pompe (28) ou d'un récipient pour d'autres objets.

9. Elément porteur de charge selon l'une quelconque des revendications 1 à 8, **caractérisé en ce qu'**il présente à son extrémité arrière (2) orientée vers l'extrémité arrière du véhicule, un élément de réception d'un feu arrière rapporté (48) pour recevoir un feu arrière auto-éclairant et/ou réfléchissant.

10. Elément porteur de charge selon l'une quelconque des revendications 1 à 9, **caractérisé en ce qu'**il présente à son extrémité avant (1) orientée vers la selle du véhicule, un dispositif de fixation conjugué (58) pouvant de préférence être relevé et rabattu.

11. Elément porteur de charge selon la revendication 10, **caractérisé en ce que** le dispositif de fixation conjugué (58) présente un élément de maintien vers le bas (64) qui dans l'état relevé du dispositif de fixation conjugué (58) est disposé à distance de la surface porteuse (12).

12. Elément porteur de charge selon l'une quelconque des revendications 1 à 11, **caractérisé en ce qu'**il présente un arceau de serrage (74) et/ou des ouvertures d'enfichage (78) pour recevoir une pièce de couverture enfichable.

13. Elément porteur de charge selon l'une quelconque des revendications 1 à 12, **caractérisé en ce que** sur le côté inférieur de l'élément porteur de charge (10) opposé à la surface porteuse (12) sont prévus des éléments de fixation (80) pour le montage de montants de support qui sont disposés les uns par rapport aux autres de préférence approximativement dans les sommets d'un triangle.
